**Europäisches Patentamt**

**European Patent Office**

**Office européen des brevets**

(19)

(11) Numéro de publication: **0 128 087**
**A1**

## (12) DEMANDE DE BREVET EUROPEEN

(21) Numéro de dépôt: **84401097.5**

(22) Date de dépôt: **28.05.84**

(51) Int. Cl.³: **H 02 B 1/08**
**E 05 B 65/46**

(30) Priorité: **03.06.83 EP 83401130**

(43) Date de publication de la demande:
**12.12.84 Bulletin 84/50**

(84) Etats contractants désignés:
**BE DE FR IT NL**

(71) Demandeur: **Société Anonyme de Systèmes, Etudes et Matériel Electrique et Mécanique du Nord en abrégé MATERIEL ELECTRIQUE ET MECANIQUE DU NORD 33 rue Général de Gaulle B.P. 75 F-59139 Wattignies(FR)**

(72) Inventeur: **Dufresnoy, Bernard 17, Avenue de l'Orangerie Attiches F-59710 Pont a Marcq(FR)**

(74) Mandataire: **Bossard, Franz et al, ACEC - Service des Brevets Boîte Postale 4 B-6000 Charleroi(BE)**

(54) **Dispositif de verrouillage pour appareils électriques et armoire à tiroirs ou à porte équipé d'un tel dispositif.**

(57) Un dispositif de verrouillage pour verrouiller un tiroir (30) par rapport à un élément d'arrêt (34, 35) solidaire d'un châssis en fonction de la position d'une manette de manoeuvre (15) d'un appareil électrique, l'ouverture du tiroir entraînant le débrochage de l'appareil électrique de conducteurs d'amenée de courant électrique, est caractérisé en ce qu'il est constitué par un agencement (29, 31) de guidage et de maintien d'un verrou (32) prévu pour la fixation sur la face intérieure du panneau avant d'un tiroir (30), en ce que le verrou (32) est muni d'un pêne (33) dont l'extrémité est prévue pour s'engager avec un élément d'arrêt (34, 35), solidaire du châssis supportant le tiroir (30), en ce que le verrou (32) est déplacé au moyen d'une force appropriée dans la position verrouillée et comprend un élément (40) pour la mise en contact avec une came (39) solidaire de la manette de manoeuvre (15) de l'appareil électrique, ainsi qu'un moyen (37) de manoeuvre manuel permettant le déverrouillage et/ou le verrouillage.

Fig.3

EP 0 128 087 A1

# DISPOSITIF DE VERROUILLAGE POUR APPAREILS ELECTRIQUES ET ARMOIRE A TIROIRS OU A PORTE EQUIPE D'UN TEL DISPOSITIF

La présente invention a pour objet un dispositif de verrouillage d'un tiroir ou d'une porte par rapport à un élément d'arrêt solidaire d'un châssis supportant ce tiroir ou cette porte. Le verrouillage est réalisé en fonction de la position d'une manette de manoeuvre d'un appareil électrique, la manette de manoeuvre se trouvant à l'extérieur du tiroir ou de la porte. Le dispositif suivant l'invention est destiné à des installations dans lesquelles l'ouverture de la porte ou du tiroir verrouillé entraîne le débrochage d'un appareil électrique de conducteurs d'amenée de tension et de courant électrique et dans lesquelles il est important d'autoriser le débrochage et l'embrochage exclusivement à l'état déclenché d'un interrupteur ou sectionneur principal. De tels dispositifs sont en principe connus sous des formes variées.

L'invention a pour but un dispositif de ce genre très simple et particulièrement facile à monter sur la face arrière d'un panneau de tiroir ou de porte.

L'invention est caractérisée en ce que le dispositif de verrouillage est constitué par un agencement, notamment un boîtier de guidage et de maintien d'au moins un verrou prévu pour la fixation sur la face intérieure du panneau avant d'un tiroir ou d'une porte, en ce que le verrou est muni d'un pêne dont l'extrémité est prévue pour s'engager avec un élément d'arrêt, solidaire du châssis supportant le tiroir ou la porte, en ce que le verrou est déplaçable au moyen d'une force appropriée dans la position verrouillée et comprend un élément pour la mise en contact avec une came solidaire de la manette de manoeuvre de l'appareil électrique, ainsi qu'un moyen de manoeuvre manuel traversant une fente du dit panneau et permettant le déverrouillage et/ou le verrouillage.

Une variante particulièrement avantageuse est caractérisée en ce que le dit verrou est remplacé par un ensemble d'un premier et deuxième verrou maintenus et guidés dans le même agencement et temporairement solidarisés entr'eux, en ce que chacun des dits premier et deuxième verrous est muni d'un pêne dont les arrêtes avant et arrière d'une

54.03/1927

extrémité sont prévues pour s'engager avec l'élément d'arrêt, solidaire du châssis supportant le tiroir ou la porte, en ce que le premier verrou est sollicité au moyen d'une force appropriée dans la position déverrouillée et comprend un élément pour la mise en contact avec une came solidaire de la manette de manoeuvre de l'appareil électrique, en ce que ce premier verrou comprend un agencement ou élément pour s'engager en position de verrouillage avec le deuxième verrou de manière à maintenir simultanément les premier et deuxième verrous en position de verrouillage et en ce que ce deuxième verrou est normalement sollicité au moyen d'une force appropriée dans la position de verrouillage et comprend un moyen de manoeuvre manuel permettant le déverrouillage à l'encontre de la dite force.

L'invention est décrite ci-dessous par rapport à un exemple d'une forme d'exécution en se référant au dessin annexé. La figure 1 de ce dernier est une vue en perspective éclatée d'un dispositif selon l'invention. La figure 2 est une vue de l'intérieur d'un panneau avant d'un tiroir. La figure 3 est une vue en perspective d'une variante très simple de l'invention. .

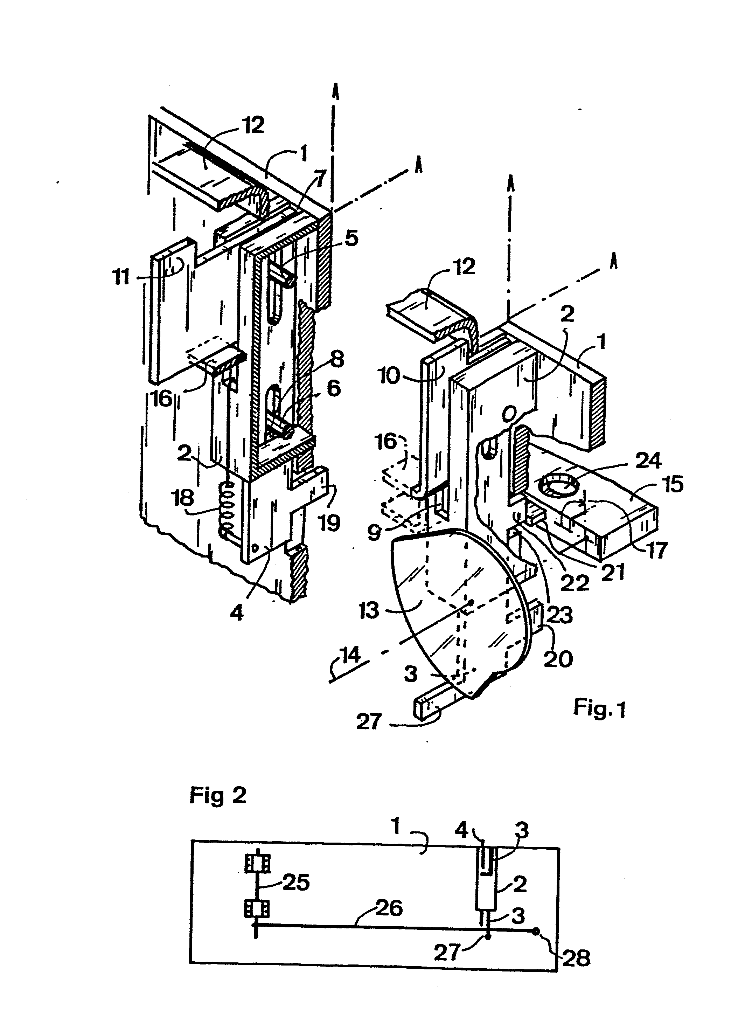

La figure 1 de ce dessin représente une vue éclatée en perspective d'un dispositif suivant l'invention monté sur la paroi avant d'un tiroir 1 partiellement coupée. Pour mieux montrer la constitution du dispositif, ce dernier a été coupé suivant un plan AA et les deux parties ainsi obtenues ont été écartées l'une de l'autre dans une direction perpendiculaire à ce plan AA. De plus, d'autres découpes ont été faites afin de faire apparaître des détails normalement cachés. Un boîtier 2 de guidage et de maintien de deux verrous mobiles 3, 4 est fixé sur la face arrière de la paroi avant d'un tiroir 1. Le maintien et le guidage des verrous 3 et 4 est réalisé d'une part par des broches 5 et 6 traversant des boutonnières dans chacun des verrous 3 et 4 et d'autre part, pour le verrou 4, par deux fentes 7, 8 dans le boîtier 2 et pour le verrou 3 par une fente 9 et une fente non visible sur le dessin se trouvant dans la face inférieure du boîtier 2.

Chaque verrou 3 et 4 est constitué par une plaquette muni d'un pêne respectivement 10 et 11 situé sur l'arête supérieure de la plaquette. Les arêtes avant et arrière de ces pênes 10 et 11 sont prévues pour s'engager avec le voile vertical d'une cornière 12, solidaire du châssis qui supporte le tiroir 1. Cette cornière 12 sert d'élément d'arrêt.

Le verrou 3 est sollicité normalement grâce à la pesanteur, dans la position déverrouillée dans laquelle le pêne 10 est dégagé de la cornière 12. En lieu et place de la force de la pesanteur toute autre force convenable peut être choisie. Il est possible de prévoir par exemple une force élastique produite par un ressort ou encore une force magnétique produite par un aimant. Cela est même nécessaire, par exemple si les pênes 10 et 11 doivent se déplacer suivant des plans horizontaux.

Le verrou 3 est actionné par une came 13 solidaire d'un arbre de commande 14 d'une manette 15 à l'extérieur du tiroir 1. Cette manette 15 est la manette de manoeuvre d'un appareil électrique, par exemple d'un sectionneur ou interrupteur principal. La came 13 soulève un élément 16 du verrou 3 d'une position basse en traits pointillés vers une position haute en traits pleins lorsque la manette 15 quitte une position déclenchée, représentée sur le dessin, en direction d'une flèche 17. Le soulèvement du verrou 3 entraîne, grâce à la forme de crochet de l'élément 16, le blocage en position haute ou position de verrouillage du verrou 4 qui repose sur l'extrémité du crochet 16. La liaison entre les deux verrous peut être différente de celle représentée, pourvu que l'agencement choisi produise le même effet, c'est-à-dire permette le mouvement libre du verrou 4 aussi longtemps que le verrou 3 se trouve en position basse ou déverrouillée et le verrouillage simultané des deux verrous lorsque le verrou 3 se trouve en position de verrouillage.

Le verrou 4 est sollicité normalement en position haute ou position de verrouillage au moyen d'une force appropriée par exemple celle produite par un ressort 18. Si le dispositif est inversé, tête en bas, cette force élastique peut être remplacée notamment par la force de la pesanteur.

Le dispositif fonctionne comme suit:

Lorsqu'un appareil électrique manoeuvrable par l'arbre de commande 14 est enclenché, la manette de manoeuvre 15 se trouve dans une position indiquée par la flèche 17 et le verrou 3 se trouve en position haute représentée sur le dessin, ainsi que le verrou 4. Dans ces conditions, il est impossible de sortir le tiroir 1, car le pêne 10 est retenu par la cornière 12. Lorsqu'on tourne la manette 15 dans la position représentée sur le dessin, le verrou 3 tombe en position basse, mais grâce au ressort 18, le verrou 4 reste en position haute. Il est alors possible de sortir le tiroir d'une longueur environ égale à celle entre les arêtes avant du pêne 10 et du pêne 11. Cette longueur est choisie suffisante pour assurer le débrochage complet de l'appareil électrique, non représenté, solidaire du tiroir, d'amenées de courant, non représentées, solidaires du châssis. Ce débrochage ne peut donc se faire que lorsque l'appareil électrique est déclenché. Si on veut enlever complètement le tiroir 1, il est nécessaire d'abaisser à la main le verrou 4, par exemple en tirant sur un ergot 19. Au moment de la mise en place du tiroir, celui-ci ne peut pas être embroché directement. Il faut aussi tirer d'abord sur l'ergot 19 pour permettre au pêne 11 de s'escamoter en dessous de la cornière 12.

Si à ce moment, l'appareil électrique est enclenché, le pêne 10 se trouve en position haute et empêche l'embrochage. Ce dernier devient possible seulement si l'appareil électrique est déclenché, c'est-à-dire pour la position de la manette 15 représentée sur le dessin pour laquelle le verrou 3 tombe en position basse.

Il est possible, en outre, de verrouiller la position du tiroir en position débrochée de manière qu'il ne soit pas possible, ni de l'embrocher, ni de l'enlever. Pour ce faire le tiroir est sorti de manière que le pêne 11 se trouve à l'intérieur de la cornière 12 en position haute et le pêne 10 à l'extérieur de la cornière 12 en position haute, tout en maintenant déclenché l'appareil électrique. Pour ce faire, le verrou 3 est poussé en position haute par exemple en le manoeuvrant au moyen d'un ergot 20, ensuite, un coulisseau 21 est glissé en dessous d'un ergot 22 dans une fente 23 de la paroi du tiroir 1 perpendiculaire au sens de mouvement du verrou 3. La position du coulisseau 21 est ensuite verrouillée grâce à l'insertion dans un ou plusieurs trous 24 de la manette 15 d'un ou plusieurs cadenas. Des manettes munies de tels coulisseaux cadenassables existent dans le commerce, mais ne servent pas au même but.

Lorsqu'il s'agit de verrouiller un tiroir de grande largeur ou une porte de grande hauteur, il peut être utile de prévoir un verrouillage à deux endroits différents. Dans ce cas, au moins la position du verrou 3 peut être répétée par un verrou auxiliaire simple 25 (fig.2) actionné au moyen d'un levier ou d'une tringle 26 manoeuvré par un élément approprié du verrou 3, par exemple un bras 27, la tringle 26 pivotant, par exemple, autour d'un pivot 28.

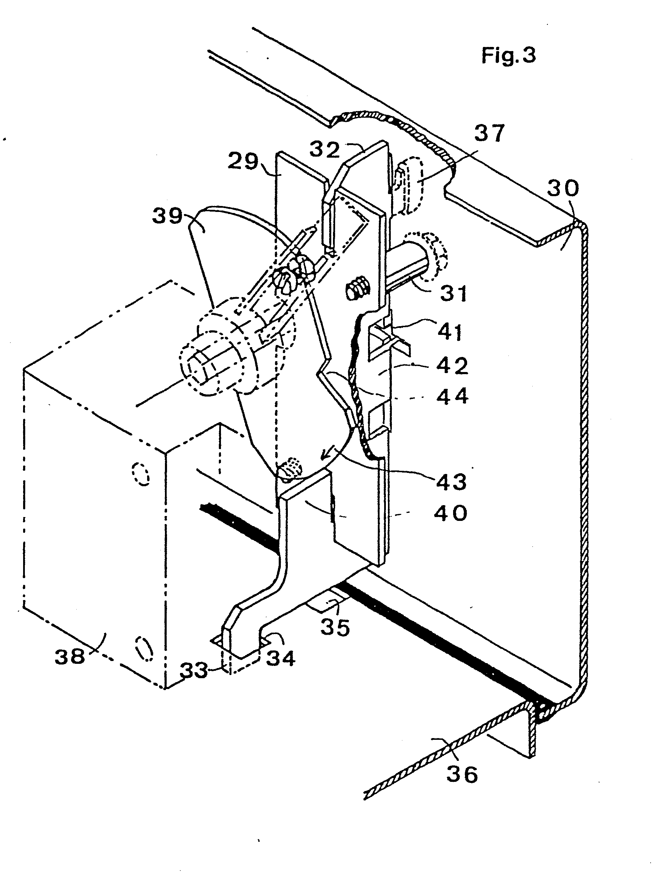

Selon une variante particulièrement simple de l'invention l'agencement à fixer sur la face intérieure d'un tiroir ou d'une porte ne comprend qu'un seul verrou. Une telle variante est représentée à la figure 3.

L'agencement de guidage et de maintien est ici remplacé par une simple plaquette échancrée 29 vissée sur le panneau 30 d'un tiroir par l'intermédiaire de tubes distanciers 31.

Un verrou 32 coulissant dans les échancrures de la plaquette 25 d'une part et dans des fentes du panneau 30 d'autre part est guidé et maintenu par l'ensemble de ces échancrures et fentes comme cela est le cas pour les verrous 3 et 4 montrés à la figure 1. Le verrou 32 peut s'engager au moyen d'un pêne 33 à son extrémité inférieure dans des trous d'arrêt 34 et 35 pratiqués dans la tôle de fond 36 du châssis sur laquelle glisse le tiroir avec le panneau avant 30. Le verrou 32 est déplaçable dans la position basse verrouillée montrée sur le dessin au moyen d'une force appropriée exercée soit par la main par l'intermédiaire d'un ergot 37 traversant une fente dans le panneau 30, soit par la pesanteur du verrou 32, soit encore par une force exercée par un ressort, non représenté. L'écartement entre les trous 34 et 35 correspond au déplacement du tiroir nécessaire et suffisant pour débrocher les appareils montés sur ce dernier. L'ergot 37 traverse une fente dans le panneau 30 pour le rendre accessible de l'extérieur et permet le déverrouillage manuel du pêne 33 éventuellement à l'encontre d'une force de rappel. S'il n'est pas fait usage d'une force de rappel pour assurer le verrouillage, ce dernier est également assuré par une action sur l'ergot 37.

Comme dans la solution suivant la figure 1, une manette rotative 15, non montrée à la figure 3 permet d'actionner un appareil de coupure 38 dans le tiroir. L'axe de rotation de la manette 15 supporte une came 39 entrant en contact avec un élément, notamment un appendice 40 du verrou 32. Toutefois, contrairement à ce qui est réalisé dans l'appareil suivant la figure 1, cette came 39 n'est pas prévue pour déplacer le verrou 32 par l'intermédiaire de l'appendice 40. Elle a pour unique but, selon sa position par rapport à l'élément 40, d'interdire ou d'autoriser des mouvements de la came 39 exécutés soit par des interventions manuelles, soit au moyen de forces de rappel.

L'appareil de coupure 30 peut être du type à axe de manoeuvre rotatif comme cela est montré sur le dessin, mais rien n'empêche qu'il soit à manette basculante actionnée au moyen d'une fourche sur l'axe de rotation de la came 39, ou sur la came 39 même.

La manette 15 peut être équipée d'un coulisseau 21, non montré à la figure 3, verrouillable par cadenas comme dans la solution suivant la figure 1. Dans ce dernier cas, l'insertion d'un ou plusieurs cadenas dans les trous de la manette 15 a pour effet d'introduire un coulisseau 21 dans la branche horizontale d'une fente en forme de croix 41. La branche verticale de la fente en croix 41 est traversée par un ergot 42 du verrou 32. Le verrouillage de l'ergot 42 par le coulisseau introduit dans la branche horizontale de la fente en croix 41 dans la position déclenchée de la manette 15 a pour effet d'immobiliser le verrou 32 en position basse et empêche non seulement l'enclenchement de l'appareil 38 par l'intermédiaire de la manette, mais aussi tout déplacement du tiroir.

La forme en croix de la fente 41 est utile dans le cas de l'exemple montré à la figure 3. Toutefois, l'effet souhaité peut être obtenu aussi au moyen d'une simple fente parallèle au mouvement du verrou 32, d'une position appropriée de l'axe de la manette 15 par rapport à cette fente et par une section appropriée du coulisseau 21, afin qu'il puisse être introduit dans la fente.

Lorsque l'appareil de coupure 38 se trouve en position enclenchée, la came 39 occupe la position montrée sur le dessin. Par contre, en position déclenchée, la came 39 libère le mouvement de l'appendice 40 du verrou 32 vers sa position haute dans laquelle le pêne 33 est dégagé du trou 34. Cette libération a lieu grâce à une rotation de la came 39 dans le sens de la flèche 43 jusqu'à ce qu'une échancrure en forme de coin rectangulaire 44 se trouve dans le prolongement de l'appendice 40 du verrou 32.

La version simplifiée selon figure 3 permet aussi d'interdire le débrochage ou l'embrochage du tiroir lorsque l'appareil de coupure est enclenché. Par contre, comme il est nécessaire de soulever à la main le verrou 32 lors du débrochage, la position d'essai n'est pas atteinte automatiquement lors du mouvement de débrochage, mais doit être trouvé grâce à une certaine adresse de l'opérateur. Si l'embrochage de l'appareil de coupure 38 sur le tiroir n'est pas parfait, l'extrémité du verrou 32 n'entre pas dans le trou 34 ou 35 et dans cette position, l'appendice 40 interdit via la came 39 l'enclenchement de l'appareil de coupure. Au moment de la mise en place du tiroir, ce dernier est d'abord posé à une distance différente de celle de la position d'essai. Ensuite, en levant le verrou 32, à l'aide de l'ergot 37, le tiroir peut être soit placé dans la position d'essai (trou 35) soit embroché directement (trou 34). Si le pêne 33 n'entre pas automatiquement dans les trous 34 ou 35 grace à une force de rappel agissant sur le verrou 32, une action manuelle via l'ergot 37 est nécessaire. La version simplifiée convient donc à des tiroirs légers et de faible largeur, manipulables à une seule main, l'autre main restant libre pour des interventions manuelles.

## REVENDICATIONS

1. Dispositif de verrouillage pour verrouiller un tiroir ou une porte (1,30) par rapport à un élément d'arrêt (12,34,35) solidaire d'un châssis supportant ce tiroir ou cette porte (1,30) en fonction de la position d'une manette de manoeuvre (15) d'un appareil électrique accessible de l'extérieur du dit tiroir ou de la dite porte (1,30), l'ouverture du tiroir ou de la porte entraînant le débrochage de l'appareil électrique de conducteurs d'amenée de courant électrique, caractérisé en ce qu'il est constitué par un agencement (2,25,27) de guidage et de maintien d'au moins un verrou (4,32) prévu pour la fixation sur la face intérieure du panneau avant d'un tiroir ou d'une porte (1,30), en ce que le verrou est muni d'un pêne (11,33) dont l'extrémité est prévue pour s'engager avec un élément d'arrêt (12,34, 35), solidaire du châssis supportant le tiroir ou la porte (1,30) en ce que le verrou (4) est déplacé au moyen d'une force appropriée dans la position verrouillée et comprend un élément (16,40) pour la mise en contact avec une came (13,39) solidaire de la manette de manoeuvre (15) de l'appareil électrique, ainsi qu'un moyen (19,37) de manoeuvre manuel permettant le déverrouillage et/ou le verrouillage.

2. Dispositif suivant la revendication 1, caractérisé en ce que le verrou 32 est rappelé dans la position verrouillée par une force de rappel.

3. Dispositif suivant la revendication 1, caractérisé en ce que le dit verrou (32) est remplacé par un ensemble d'un premier (3) et deuxième (4) verrous maintenus et guidés dans un agencement sous forme de boîtier (2) et temporairement solidarisés entr'eux, en ce que chacun des dits premier (3) et deuxième (4) verrou est muni d'un pêne (10,11) dont les arrêtes avant et arrière d'une extrémité sont prévues pour s'engager avec l'élément d'arrêt (12), solidaire du châssis supportant le tiroir ou la porte (1), en ce que le premier verrou (3) est sollicité au moyen d'une force appropriée dans la position déverrouillée et comprend un élément (16) pour la mise en contact avec une came (13) solidaire de la manette de manoeuvre (15) de l'appareil électrique, en ce que ce premier verrou (3) comprend un agencement ou élément (16) pour s'engager en position de verrouillage avec le deuxième verrou (4)

54.03/1927

de manière à maintenir simultanément les premier et deuxième verrous (3,4) en position de verrouillage et en ce que ce deuxième verrou (4) est normalement sollicité au moyen d'une force appropriée dans la position de verrouillage et comprend un moyen (19) de manoeuvre manuel permettant le déverrouillage à l'encontre de la dite force.

4. Dispositif suivant une des revendications 1 ou 3, caractérisé en ce que un des verrous(32,3,4) comprend un ergot (22,42) coulissant dans ou en face d'une fente (23,41) dans le panneau avant (1,30) du tiroir ou de la porte, fente prévue pour l'insertion d'un coulisseau (21) cadenassable solidaire de la manette de manoeuvre (15) de l'appareil électrique.

5. Dispositif suivant une des revendications 3 ou 4, caractérisé en ce que le verrou (3) comprend un bras (27) agissant sur une tringle ou levier (26) actionnant un verrou auxilaire (25).

0128087

Fig.1

Fig 2

Fig.3

Office européen
des brevets

# RAPPORT DE RECHERCHE EUROPEENNE

EP 84 40 1097

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl. 3) |
|---|---|---|---|
| X | US-A-2 988 612 (HERCULES L.A.) * Colonne 6, lignes 43-60; figures 11,12 * | 1,2 | H 02 B 1/08 E 05 B 65/46 |
| | --- | | |
| A | FR-A-2 164 523 (MATERIEL ELECTRIQUE ET MECANIQUE DU NORD) * Page 11, lignes 20-32; figures 6-8 * | 1,3 | |
| | --- | | |
| A | FR-A-2 163 379 (MERLIN GERIN) * Page 5, revendication 1 * | 1,3 | |
| | --- | | |
| A | US-A-2 806 099 (REXROAD J.O.) * Colonne 5, lignes 26-36; colonne 6, lignes 6-25; figures 1,3,4 * | 1,3-5 | |
| | --- | | **DOMAINES TECHNIQUES RECHERCHES (Int. Cl. 3)** |
| A | FR-A-2 447 602 (TOKYO SHIBAURA DENKI K.K.) * Page 14, lignes 1-15; figures 5-8 * | 1,3 | H 02 B H 01 H E 05 B E 05 C |
| | ----- | | |

Le présent rapport de recherche a été établi pour toutes les revendications

| Lieu de la recherche | Date d'achèvement de la recherche | Examinateur |
|---|---|---|
| LA HAYE | 07-08-1984 | GRENTZIUS W. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

OEB Form 1503 03 82